# EUROPEAN PATENT APPLICATION

(11) **EP 3 874 984 A1**
(43) Date of publication of application: **08.09.2021**
(21) Application number: 20205254.4
(22) Date of filing: 02.11.2020
(51) Int. Cl.: A43B 1/04, A43B 23/02, A43B 23/04, A43D 11/00, B29D 35/12

(54) **THREE-DIMENSIONAL VACUUM SUCKING AND SHRINKING PROCESS AND EQUIPMENT AND METHOD FOR PROCESSING SILICONE SHOE VAMP**

(30) Priority: 05.03.2020 CN 202010145551; 17.07.2020 CN 202010689100
(71) Applicant: Fujian Putian Shuangyuan Footwear Co., Ltd., Putian, Fujian (CN)
(72) Inventor: Wen, Qingwei, Putian, Fujian (CN); Chen, Wenbiao, Putian, Fujian (CN); Chen, Liyu, Putian, Fujian (CN)
(74) Representative: Gulde & Partner

(57) **Abstract**

The present disclosure discloses a three-dimensional vacuum sucking and shrinking process, a three-dimensional vacuum sucking and shrinking device and a method for processing a silicone shoe vamp, realizing 3D production of sock-like shoes by a series of steps including knitting, shoe last placement, shaping, cooling, fixation of a shaping membrane and vacuum sucking and shrinking. The present disclosure uses a thermoplastic membrane. The thermoplastic membrane is quickly and tightly adhered to the surface of a sock in a way of hot pressing, sucking and shrinking under vacuum to further shape the sock. Compared with prior art, the present disclosure simplifies production process, enhances production efficiency and improves quality of sock-like shoes.

## Description

### Technical Field

The present disclosure relates to the field of production of shoes for daily use, in particular to a three-dimensional vacuum sucking and shrinking process, a three-dimensional vacuum sucking and shrinking device and a method for processing a silicone shoe vamp.

### Background Technology

According to existing production processes of sock-like shoes, plane knitting is usually adopted to manufacture sock-like shoes, and after plane knitting is finished, a series of procedures such as hot-pressed shaping and shoe sole assembling are carried out to obtain complete sock-like shoes. However, sock-like shoes manufactured by existing processes have defects such as poor wearability, poor shaping effect and water seepage via a vamp, and the existing manufacture technology of sock-like shoes is poor in efficiency.

### Brief Summary of the Invention

The technical problem to be solved by the present disclosure is to provide a three-dimensional vacuum sucking and shrinking process, a three-dimensional vacuum sucking and shrinking device and a method for processing a silicone shoe vamp to improve the production efficiency and quality of sock-like shoes.

A technical solution adopted by the present disclosure to solve the foregoing technical problems is as follows:
A three-dimensional (3D) vacuum sucking and shrinking process includes the following steps:
S1: knitting: knitting a sock using a 3D knitting machine and making preparations for sealing;
S2: sealing: sealing the sock obtained in S1 on one side;
S3: placing a shoe last: placing the shoe last into the sock;
S4: hot-pressed shaping under vacuum: shaping the sock obtained in S3 under heating and vacuum conditions;
S5: cooling: cooling the sock shaped in S4 in a cooling chamber at -10°C-5°C;
S6: fixing a shaping membrane: covering sock with a shaping membrane and fixing the shaping membrane;
S7: preparation before sucking and shrinking: covering the sock obtained in S6 with a membrane pressing sleeve;
S8: hot pressing, sucking and shrinking under vacuum: hot pressing, sucking and shrinking the sock covered with the membrane pressing sleeve in S7 under vacuum to fix the shaping membrane on the outer side of the sock to realize complete shaping; and,
S9: assembling: assembling a shoe sole to the sock obtained in S8 to obtain a complete shoe.

The present disclosure has the following beneficial effects: hot-pressed shaping under vacuum is adopted to fix the shape of the sock and facilitate fixation of the shaping membrane on the sock, so that the shaping membrane can cover designated positions after sucking and shrinking under vacuum; due to the adoption of vacuum sucking and shrinking, the membrane pressing sleeve is tightly adsorbed to the surface of the sock under vacuum, and since the sock is in hot environment, the shaping membrane is melted on the surface of the sock and forms a shaped layer and a waterproof layer on the surface of the sock after the sock gets cool and is solidified, thereby shaping the sock and endowing the sock with a waterproof function; the knitted 3D sock adopted in the present disclosure forms a three-dimensional sock structure after knitting is completed, and two openings exist at the same time, so it needs to seal a bottom opening before shaping. Compared with plane socks, it does not need to suture the sock after shaping. Moreover, the present disclosure can manufacture the sock by means of shaping and vacuum sucking and shrinking, improving production efficiency.

Another technical solution adopted by the present disclosure to solve the foregoing technical problems is as follows:
A three-dimensional vacuum sucking and shrinking device includes a sucking and shrinking assembly and a thermal fixing assembly;
the sucking and shrinking assembly includes a base, a sucking and shrinking tabletop, an elastic cushion, a pressing plate and a vacuum pump, where the sucking and shrinking tabletop is positioned at an upper part of the base, the sucking and shrinking tabletop is provided with a vent hole, the vacuum pump is provided below the sucking and shrinking tabletop to downward suck air above the sucking and shrinking tabletop via a through-hole, the elastic cushion is positioned at an upper part of the sucking and shrinking tabletop, the pressing plate is movably clad on an upper part of the elastic cushion, the pressing plate is provided with a handle, the through-hole in the shape of a shoe sole is formed at the middle part of the pressing plate, a shoe body nested with a shoe last is placed at the through-hole, the surface of the shoe body is covered with a silicone sleeve, and an edge of the silicone sleeve is pressed fit between the pressing plate and the elastic cushion;
the thermal fixing assembly includes a heating box, and the heating box is horizontally and slidably connected to the upper part of the sucking and shrinking tabletop, such that the shoe body enters or exits from the heating box.

Another technical solution adopted by the present disclosure to solve the foregoing technical problems is as follows:
A method for processing a silicone shoe vamp includes the following steps:
Step 1: placing a shoe last into a shoe body, and laying an elastic cushion on a sucking and shrinking tabletop;
Step 2: placing the shoe body nested with the shoe last on an upper part of the elastic cushion;
Step 3: covering the surface of the shoe body with a silicone membrane, and extending an edge of the silicone membrane to the upper part of the elastic cushion;
Step 4: pressing the pressing plate on the upper part of the elastic cushion, and fitting the edge of the silicone membrane completely between the elastic cushion and the pressing plate in a sealing way;
Step 5: pumping air at an upper part of a vent hole out using a vacuum pump such that the silicone membrane fits the surface of the shoe body under vacuum;
Step 6: controlling a heating box to horizontally slide relative to the sucking and shrinking tabletop such that the shoe body enters the heating box and that the silicone membrane fits a thermoplastic membrane of the shoe body at 150°C-250°C; and,
Step 7: controlling the heating box to horizontally slide relative to the sucking and shrinking tabletop to move the shoe body out of the heating box after the silicone membrane fits the surface of the shoe body at a high temperature, cooling, and removing excessive silicone membrane to complete processing of a silicone shoe vamp.

The present disclosure has the following beneficial effects: The 3D vacuum sucking and shrinking device provided by the present disclosure is a special device designed on the basis of the process where the surface of the shoe body three-dimensionally fits the silicone membrane, capable of ensuring that the three-dimensional vamp fits the silicone membrane at one time. Compared with the prior art, it does not need to suck, shrink and shape the silicone membrane via another 2D mold and then splice and adhere the silicone membrane onto the surface of the shoe body, thereby simplifying the process and greatly improving working efficiency; besides, the 3D vacuum sucking and shrinking device can ensure that the silicone membrane can perfectly fit the surface of the shoe body, avoid fitting misposition and fitting joint to ensure the appearance of the shoe body, and realize seamless fit of the silicone membrane.

### Brief Description of the Drawings

FIG. 1 is a flowchart of a three-dimensional sucking and shrinking process according to one embodiment of the present disclosure;
FIG. 2 is a structural view of a three-dimensional sucking and shrinking device according to one embodiment of the present disclosure;
FIG. 3 is a partial structural view of a three-dimensional sucking and shrinking device according to one embodiment of the present disclosure;

### Description of reference signs:

1. Base; 2. Sucking and shrinking tabletop; 21. Horizontal guide rail; 3. Elastic cushion; 4. Pressing plate; 41. Through-hole; 42. Movable lock catch; 43. Handle; 5. Shoe body; 6. Shoe last; 7. Heating box; 71. Movable partition; 72. Cooling fan.

### Detailed Description of Embodiments

To clarify the technical content, objective and effects of the technical solution in detail, the following are detailed description of the present disclosure in conjunction with specific embodiment and accompanying drawings.

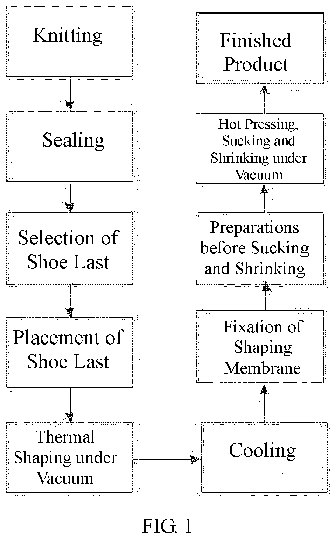

Refer to FIG. 1. A three-dimensional (3D) vacuum sucking and shrinking process includes the following steps:
S1: knitting: knitting a sock using a 3D knitting machine and making preparations for sealing;
S2: sealing: sealing the sock obtained in S1 on one side;
S3: placing a shoe last: placing the shoe last into the sock;
S4: hot-pressed shaping under vacuum: shaping the sock obtained in S3 under heating and vacuum conditions;
S5: cooling: cooling the sock shaped in S4 in a cooling chamber at -10°C-5°C;
S6: fixing a shaping membrane: covering sock with a shaping membrane and fixing the shaping membrane;
S7: preparation before sucking and shrinking: covering the sock obtained in S6 with a membrane pressing sleeve;
S8: hot pressing, sucking and shrinking under vacuum: hot pressing, sucking and shrinking the sock covered with the membrane pressing sleeve in S7 under vacuum to fix the shaping membrane on the outer side of the sock to realize complete shaping; and,
S9: assembling: assembling a shoe sole to the sock obtained in S8 to obtain a complete shoe.

The working principle of the present disclosure:
First, 3D knitting is adopted to obtain the integrally knitted 3D sock, and then one side of the sock is sealed to form the shoe sole;
Second, the sock is thermally shaped under vacuum after being nested with the shoe last, where the sock fits the surface of the shoe last for thermal shaping under vacuum and cooled after shaping is completed;
Third, the surface of the cooled sock is covered with the shaping membrane; the membrane pressing sleeve is applied after the shaping membrane is fixed on the surface of the sock and hot pressed, sucked and shrunk under vacuum, where the membrane pressing sleeve is tightly pressed on the surface of the sock under vacuum, and the shaping membrane is melted and adhered to the surface of the sock to integrally mold with the sock at a high temperature.

From the foregoing description it can be known that the present disclosure has the following beneficial effects: hot-pressed shaping under vacuum is adopted to fix the shape of the sock and facilitate fixation of the shaping membrane on the sock, so that the shaping membrane can cover designated positions after sucking and shrinking under vacuum; due to the use of vacuum sucking and shrinking, the membrane pressing sleeve is tightly adsorbed to the surface of the sock under vacuum, and since the sock is in hot environment, the shaping membrane is melted on the surface of the sock and forms a shaped layer and a waterproof layer on the surface of the sock after the sock gets cool and is solidified, thereby shaping the sock and endowing the sock with a waterproof function; the knitted 3D sock adopted in the present disclosure forms a three-dimensional sock structure after knitting is completed, and two openings exist at the same time, so it needs to seal a bottom opening before shaping. Compared with plane socks, it does not need to suture the sock after shaping. Moreover, the present disclosure can manufacture the sock by means of shaping and vacuum sucking and shrinking, improving production efficiency.

Further, the shaping membrane in S6 is a thermoplastic membrane.

Further, the thermoplastic membrane is any one of PE (Polyethylene), PVC (Polyvinyl Chloride), PP (Polypropylene), PS (Polystyrene) and TPU (Thermoplastic Polyurethane).

From the foregoing description it can be known that the thermoplastic membrane can be melted and adhered to the surface of the sock at a high temperature, such that the sock has a waterproof function and is further shaped.

Further, the membrane pressing sleeve is high temperature resistant rubber.

From the foregoing description it can be known that, since the membrane pressing sleeve needs to work in high-temperature environment, the high temperature resistant rubber is required to prevent the membrane pressing sleeve from melting and adhering to the surface of the sock during heating, and the high temperature resistant rubber has elasticity and can tightly fit the sock.

Further, in S6, heating iron is adopted for melting and fixation.

From the foregoing description it can be known that heating iron can melt and fix the shaping membrane, and the shaping membrane is adhered to the surface of the sock after melting and can be bonded with the surface of the sock after cooling and solidification to realize fixation. Such fixation method is simple and efficient.

Further, in S2, a knitting sealing machine is adopted for sealing.

Further, in S4, the sock is placed in a 3D silk melting machine for shaping.

Further, in S8, the sock is placed in a 3D vacuum plastic forming machine for hot pressing, sucking and shrinking under vacuum.

From the foregoing description it can be known that, when the vacuum plastic forming machine is adopted to suck and shrink the shaping member, the shaping membrane is adhered to the surface of the sock, thereby improving production efficiency.

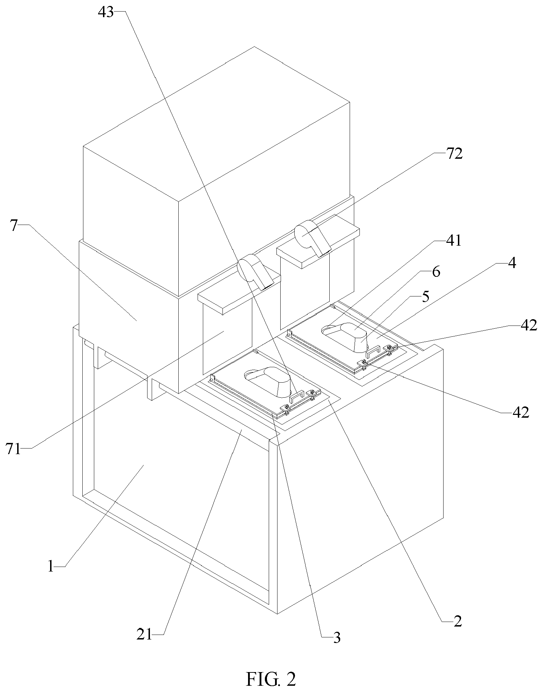

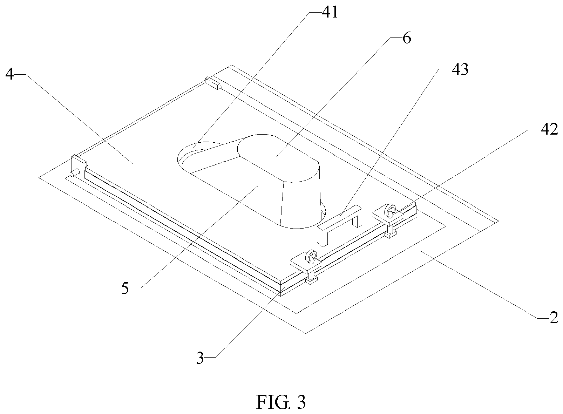

Refer to FIG. 2 and FIG. 3. A three-dimensional vacuum sucking and shrinking device includes a sucking and shrinking assembly and a thermal fixing assembly;
the sucking and shrinking assembly includes a base 1, a sucking and shrinking tabletop 2, an elastic cushion 3, a pressing plate 4 and a vacuum pump, where the sucking and shrinking tabletop 2 is positioned at an upper part of the base 1, the sucking and shrinking tabletop 2 is provided with a vent hole, the vacuum pump is provided below the sucking and shrinking tabletop 2 to downward suck air above the sucking and shrinking tabletop 2 via a through-hole 41, the elastic cushion 3 is positioned at an upper part of the sucking and shrinking tabletop 2, the pressing plate 4 is movably clad on an upper part of the elastic cushion 8, the pressing plate 4 is provided with a handle 43, the through-hole 41 in the shape of a shoe sole is formed at the middle part of the pressing plate 4, a shoe body 5 nested with a shoe last 6 is placed at the through-hole 41, the surface of the shoe body 5 is covered with a silicone sleeve, and an edge of the silicone sleeve is pressed fit between the pressing plate 4 and the elastic cushion 3;
the thermal fixing assembly includes a heating box 7, and the heating box 7 is horizontally and slidably connected to the upper part of the sucking and shrinking tabletop 2, such that the shoe body 5 enters or exits from the heating box 7.

In the structure of the 3D vacuum sucking and shrinking device, more than two sets of elastic cushions 3 and pressing plates 4 can be designed on one sucking and shrinking tabletop 2, such that more than two (a pair of) shoes can be processed at the same time.

The process of fitting the silicone membrane on the surface of the shoe body 5 using the 3D vacuum sucking and shrinking device includes the following steps: 1) placing the shoe last 6 into the shoe body 5, and laying the elastic cushion 3 on the sucking and shrinking tabletop 2; 2) placing the shoe body 5 nested with the shoe last 6 at the upper part of the elastic cushion 3; 3) covering the surface of the shoe body 5 with the silicone membrane, and extending the edge of the silicone membrane to the upper part of the elastic cushion; 4) pressing the pressing plate 4 at the upper part of the elastic cushion, and fitting the edge of the silicone membrane completely between the elastic cushion and the pressing plate 4 in a sealing way; 5) pumping air at an upper part of the vent hole out using the vacuum pump such that the silicone membrane fits the surface of the shoe body 5 under vacuum; 6) controlling the heating box 7 to horizontally slide relative to the sucking and shrinking tabletop such that the shoe body 5 enters the heating box 7 and that the silicone membrane fits the thermoplastic membrane of the shoe body 5 at a high temperature, where the thermoplastic membrane is any one or a mixture of several ones of PE, PVC, PP, PS and TPU; and 7), controlling the heating box 7 to horizontally slide relative to the sucking and shrinking tabletop to move the shoe body 5 out of the heating box 7 after the silicone membrane fits the surface of the shoe body 5 at a high temperature, cooling, and removing excessive silicone membrane to complete the process of fitting the silicone membrane.

The heating and movement of the heating box 7 and the air pumping of the vacuum pump can automatically complete under the control of a PLC (Programmable Logistic Control).

The 3D vacuum sucking and shrinking device provided by the present disclosure is a special device designed on the basis of the process where the surface of the shoe body 5 three-dimensionally fits the silicone membrane, capable of ensuring that the three-dimensional vamp fits the silicone membrane at one time. Compared with the prior art, it does not need to suck, shrink and shape the silicone membrane via another 2D mold and splice and adhere the silicone membrane onto the surface of the shoe body, thereby simplifying the process and greatly improving working efficiency; besides, the 3D vacuum sucking and shrinking device can ensure that the silicone membrane can perfectly fit the surface of the shoe body 5, avoid fitting misposition and fitting joint to ensure the appearance of the shoe body 5, and realize seamless fit of the silicone membrane.

Further, in the 3D vacuum sucking and shrinking device, one end of the pressing plate 4 is rotationally connected to the sucking and shrinking tabletop 2, and the other end of the pressing plate 4 is pressed against the upper part of the elastic cushion 3 via a movable lock catch 42.

The rotational structure of the pressing plate 4 is matched with the structure of the movable lock catch 42 to facilitate positioning, press fitting and opening of the pressing plate 4, further improving the working efficiency of 3D vacuum sucking and shrinking and fitting of the silicone membrane on the shoe body 5. The movable end of the pressing plate 4 can also be provided with the handle 43 to facilitate opening of the pressing plate 4.

Further, in the 3D vacuum sucking and shrinking device, a horizontal guide rail 21 is provided on a lateral side of the sucking and shrinking tabletop 2, and a slider matched with the horizontal guide rail 21 is provided at the lower part of the heating box 7.

In the forgoing structure, the match of the slider and the horizontal guide rail 21 in a limiting way brings convenience in control over the oriented horizontal movement of the heating control 7 on the surface of the sucking and shrinking platform.

Further, in the 3D vacuum sucking and shrinking device, a movable partition 71 is provided at a position, facing the shoe body 5, of the heating box 7.

From the foregoing description it can be known that, the movable partition 71 is provided at a position, facing the shoe body 5, of the heating box 7, and the movable partition 71 can be designed as a structure with an articulated upper structure. By the effect of gravity, the movable partition 71 naturally hangs down to seal an opening of the box. When the heating box 7 moves to drive the shoe body 5 to enter the heating box 7, the shoe body 5 pushes open the movable partition 71 to move in and out automatically, and the movable partition 71 automatically seals the opening of the box after the shoe body moves in and out, thereby helping improve the temperature preservation effect in the heating box 7.

Further, in the 3D vacuum sucking and shrinking device, a cooling fan 72 which faces the shoe body 5 is fixed on the heating box 7.

In the forgoing structure, the shoe body 5 is quickly directly air cooled by the cooling fan 72 after the shoe body 5 fits the silicone membrane at a high temperature and exits from the heating box 7, thereby improving efficiency.

Further, in the 3D vacuum sucking and shrinking device, a heating tube is provided at the upper part of the heating box 7.

The present disclosure also relates to a method for processing a silicone shoe vamp, including the following steps:
Step 1: placing a shoe last into a shoe body, and laying an elastic cushion on a sucking and shrinking tabletop;
Step 2: placing the shoe body nested with the shoe last on an upper part of the elastic cushion;
Step 3: covering the surface of the shoe body with a silicone membrane, and extending an edge of the silicone membrane to the upper part of the elastic cushion;
Step 4: pressing the pressing plate on the upper part of the elastic cushion, and fitting the edge of the silicone membrane completely between the elastic cushion and the pressing plate in a sealing way;
Step 5: pumping air at an upper part of a vent hole out using a vacuum pump such that the silicone membrane fits the surface of the shoe body under vacuum;
Step 6: controlling a heating box to horizontally slide relative to the sucking and shrinking tabletop such that the shoe body enters the heating box and that the silicone membrane fits a thermoplastic membrane of the shoe body at 150°C-250°C; and,
Step 7: controlling the heating box to horizontally slide relative to the sucking and shrinking tabletop to move the shoe body out of the heating box after the silicone membrane fits the surface of the shoe body at a high temperature, cooling, and removing excessive silicone membrane to complete processing of a silicone shoe vamp.

The thermoplastic membrane is any one or a mixture of several ones of PE, PVC, PP, PS and TPU.

In step 5, the pumping time of the vacuum pump is 10-35 seconds.

In step 6, the shoe body remains in the heating box for 5-20 minutes.

### Embodiment 1 of the present disclosure:

Refer to FIG. 1. A three-dimensional (3D) vacuum sucking and shrinking process includes the following steps:
S1: knitting: knitting a sock using a 3D knitting machine and making preparations for sealing;
S2: sealing: sealing the sock obtained in S1 on one side;
S3: placing a shoe last: placing the shoe last into the sock;
S4: hot-pressed shaping under vacuum: shaping the sock obtained in S3 under heating and vacuum conditions, where thermal shaping time is 90-150 seconds; vacuuming time is 10-35 seconds, vacuum shaping time is 5-20 minutes, and the temperature of upper and lower molds is 190°C-240°C;
S5: cooling: cooling the sock shaped in S4 in a cooling chamber at -10°C-5°C;
S6: fixing a shaping membrane: covering sock with a shaping membrane and fixing the shaping membrane;
S7: preparation before sucking and shrinking: covering the sock obtained in S6 with a membrane pressing sleeve;
S8: hot pressing, sucking and shrinking under vacuum: hot pressing, sucking and shrinking the sock covered with the membrane pressing sleeve in S7 under vacuum to fix the shaping membrane on the outer side of the sock to realize complete shaping, where the time is 1-3 minutes, and the temperature is 150-250°C; and,
S9: assembling: assembling a shoe sole to the sock obtained in S8 to obtain a complete shoe.

Specifically, in S1, preparations before sealing include flatly placing the sock on a workbench for sealing.

In the present embodiment, the cooling temperature is -8°C; the thermal shaping time is 110 seconds; the vacuuming time is 20 seconds; the vacuum shaping time is 10 minutes; the temperature of the upper and lower molds is 190°C; and hot pressing, sucking and shrinking proceed for 1 minute at 250°C.

Optionally, in S6, the shaping membrane is a thermoplastic membrane, selected from PE, PVC, PP, PS and TPU.

Optionally, the thermoplastic membrane is PVC.

Optionally, the membrane pressing sleeve is high temperature resistant rubber.

Optionally, in S6, heating iron is adopted for melting and fixation.

Optionally, in S2, a knitting sealing machine is adopted for sealing.

Optionally, in S4, the sock is placed in a 3D silk melting machine for shaping.

Optionally, in S8, the sock is placed in a 3D vacuum plastic forming machine for sucking and shrinking under vacuum.

### Embodiment 2 of the present disclosure:

Refer to FIG. 1. A three-dimensional (3D) vacuum sucking and shrinking process includes the following steps:
S1: knitting: knitting a sock using a 3D knitting machine and making preparations for sealing;
S2: sealing: sealing the sock obtained in S1 on one side;
S3: placing a shoe last: placing the shoe last into the sock;
S4: hot-pressed shaping under vacuum: shaping the sock obtained in S4 under heating and vacuum conditions, where the thermal shaping time is 100 seconds, the vacuuming time is 25 seconds, the vacuum shaping time is 5 minutes, and the temperature of upper and lower molds is 200°C;
S5: cooling: cooling the sock shaped in S4 in a cooling chamber at -8°C;
S6: fixing a shaping membrane: covering sock with a shaping membrane and fixing the shaping membrane;
S7: preparation before sucking and shrinking: covering the sock obtained in S6 with a membrane pressing sleeve;
S8: hot pressing, sucking and shrinking under vacuum: hot pressing, sucking and shrinking the sock covered with the membrane pressing sleeve in S7 under vacuum to fix the shaping membrane on the outer side of the sock to realize complete shaping, where the time is 2 minutes and the temperature is 190°C; and,
S9: assembling: assembling a shoe sole to the sock obtained in S8 to obtain a complete shoe.

Specifically, in S1, preparations before sealing include flatly placing the sock on a workbench for sealing.

Optionally, in S6, the shaping membrane is a thermoplastic membrane, selected from PE, PVC, PP, PS and TPU.

Optionally, the thermoplastic membrane is TPU, and the thickness of the TPU is 0.08-0.8 mm.

Optionally, the membrane pressing sleeve is high temperature resistant rubber.

Optionally, in S6, heating iron is adopted for melting and fixation.

Optionally, in S2, a knitting sealing machine is adopted for sealing.

Optionally, in S4, the sock is placed in a 3D silk melting machine for shaping.

Optionally, in S8, the sock is placed in a 3D vacuum plastic forming machine for sucking and shrinking under vacuum.

### Embodiment 3 of the present disclosure:

Refer to FIG. 1. A three-dimensional (3D) vacuum sucking and shrinking process includes the following steps:
S1: knitting: knitting a sock using a 3D knitting machine and making preparations for sealing;
S2: sealing: sealing the sock obtained in S1 on one side;
S3: placing a shoe last: placing the shoe last into the sock;
S4: hot-pressed shaping under vacuum: shaping the sock obtained in S4 under heating and vacuum conditions, where the thermal shaping time is 100 seconds, the vacuuming time is 25 seconds, the vacuum shaping time is 5 minutes, and the temperature of upper and lower molds is 200°C;
S5: cooling: cooling the sock shaped in S4 in a cooling chamber at -8°C;
S6: fixing a shaping membrane: covering sock with a shaping membrane and fixing the shaping membrane;
S7: preparation before sucking and shrinking: covering the sock obtained in S6 with a membrane pressing sleeve;
S8: hot pressing, sucking and shrinking under vacuum: hot pressing, sucking and shrinking the sock covered with the membrane pressing sleeve in S7 under vacuum to fix the shaping membrane on the outer side of the sock to realize complete shaping, where the time is 3 minutes and the temperature is 150°C; and,
S9: assembling: assembling a shoe sole to the sock obtained in S8 to obtain a complete shoe.

Specifically, in S1, preparations before sealing include flatly placing the sock on a workbench for sealing.

Optionally, in S6, the shaping membrane is a thermoplastic membrane, selected from PE, PVC, PP, PS and TPU.

Optionally, the thermoplastic membrane is made from PP.

Optionally, the membrane pressing sleeve is high temperature resistant rubber.

Optionally, in S6, heating iron is adopted for melting and fixation.

Optionally, in S2, a knitting sealing machine is adopted for sealing.

Optionally, in S4, the sock is placed in a 3D silk melting machine for shaping.

Optionally, in S8, the sock is placed in a 3D vacuum plastic forming machine for sucking and shrinking under vacuum.

### Embodiment 4

Refer to FIG.2 - FIG. 3. A three-dimensional (3D) vacuum sucking and shrinking device includes a sucking and shrinking assembly and a thermal fixing assembly; the sucking and shrinking assembly includes a base 1, a sucking and shrinking tabletop 2, an elastic cushion 3, a pressing plate 4 and a vacuum pump, where the sucking and shrinking tabletop 2 is positioned at an upper part of the base 1, the sucking and shrinking tabletop 2 is provided with a vent hole, the vacuum pump is provided below the sucking and shrinking tabletop 2 to downward suck air above the sucking and shrinking tabletop 2 via a through-hole 41, the elastic cushion 3 is positioned at an upper part of the sucking and shrinking tabletop 2, the pressing plate 4 is movably clad on an upper part of the elastic cushion 3, the pressing plate 4 is provided with a handle 43, the through-hole 41 in the shape of a shoe sole is formed at the middle part of the pressing plate 4, a shoe body 5 nested with a shoe last 6 is placed at the through-hole 41, the surface of the shoe body 5 is covered with a silicone sleeve, and an edge of the silicone sleeve is pressed fit between the pressing plate 4 and the elastic cushion 3; the thermal fixing assembly includes a heating box 7, and the heating box 7 is horizontally and slidably connected to the upper part of the sucking and shrinking tabletop 2, such that the shoe body 5 enters or exits from the heating box 7. One end of the pressing plate 4 is rotationally connected to the sucking and shrinking tabletop 2; the other end of the pressing plate 4 is pressed against the upper part of the elastic cushion 3 via a movable lock catch 42; and the movable end of the pressing plate 4 is also provided with the handle 43. A horizontal guide rail 21 is provided on a lateral side of the sucking and shrinking tabletop 2, and a slider matched with the horizontal guide rail 21 is provided at the lower part of the heating box 7. A movable partition 71 is provided at a position, facing the shoe body 5, of the heating box 7. A cooling fan 72 which faces the shoe body 5 is fixed on the heating box 7. A heating tube is provided at the upper part of the heating box 7.

### Embodiment 5

A method for processing a silicone shoe vamp includes the following steps:
Step 1: placing a shoe last into a shoe body, and laying an elastic cushion on a sucking and shrinking tabletop;
Step 2: placing the shoe body nested with the shoe last on an upper part of the elastic cushion;
Step 3: covering the surface of the shoe body with a silicone membrane, and extending an edge of the silicone membrane to the upper part of the elastic cushion;
Step 4: pressing the pressing plate on the upper part of the elastic cushion, and fitting the edge of the silicone membrane completely between the elastic cushion and the pressing plate in a sealing way;
Step 5: pumping air at an upper part of a vent hole out using a vacuum pump such that the silicone membrane fits the surface of the shoe body under vacuum;
Step 6: controlling a heating box to horizontally slide relative to the sucking and shrinking tabletop such that the shoe body enters the heating box and that the silicone membrane fits a thermoplastic membrane of the shoe body at 150°C; and,
Step 7: controlling the heating box to horizontally slide relative to the sucking and shrinking tabletop to move the shoe body out of the heating box after the silicone membrane fits the surface of the shoe body at a high temperature, cooling, and removing excessive silicone membrane to complete processing of a silicone shoe vamp.

The thermoplastic membrane is any one or a mixture of several ones of PE, PVC, PP, PS and TPU.

In step 5, the pumping time of the vacuum pump is 10 seconds.

In step 6, the shoe body remains in the heating box for 5 minutes.

### Embodiment 6

The present embodiment is different from Embodiment 5 in that, the heating temperature in the heating box is 250°C, the pumping time of the vacuum pump is 35 seconds, and the shoe body remains in the heating box for 20 minutes.

### Embodiment 7

Refer to FIG. 1. A three-dimensional (3D) vacuum sucking and shrinking process includes the following steps:
S1: knitting: knitting a sock using a 3D knitting machine and making preparations for sealing;
S2: sealing: sealing the sock obtained in S1 on one side;
S3: placing a shoe last: placing the shoe last into the sock;
S4: hot-pressed shaping under vacuum: shaping the sock obtained in S3under heating and vacuum conditions, where thermal shaping time is 90-150 seconds; vacuuming time is 10-35 seconds, vacuum shaping time is 5-20 minutes, and the temperature of upper and lower molds is 190°C-240°C;
S5: cooling: cooling the sock shaped in S4 in a cooling chamber at -10°C-5°C;
S6: fixing a shaping membrane: covering sock with a shaping membrane and fixing the shaping membrane;
S7: preparation before sucking and shrinking: covering the sock obtained in S6 with a membrane pressing sleeve;
S8: hot pressing, sucking and shrinking under vacuum: hot pressing, sucking and shrinking the sock covered with the membrane pressing sleeve in S7 under vacuum to fix the shaping membrane on the outer side of the sock to realize complete shaping, where the staying time in the heating box is 5 minutes and the temperature is 250°C; and,
S9: assembling: assembling a shoe sole to the sock obtained in S8 to obtain a complete shoe.

Specifically, in S1, preparations before sealing include flatly placing the sock on a workbench for sealing.

In the present embodiment, the cooling temperature is -8°C; the thermal shaping time is 110 seconds; the vacuuming time is 20 seconds; the vacuum shaping time is 10 minutes; the temperature of the upper and lower molds is 190°C; and hot pressing, sucking and shrinking proceed for 1 minute at 250°C.

Optionally, in S6, the shaping membrane is a thermoplastic membrane, selected from any one of PE, PVC, PP, PS and TPU; preferably, the thermoplastic membrane is made from PVC. Optionally, the membrane pressing sleeve is high temperature resistant rubber. Optionally, in S6, heating iron is adopted for melting and fixation. Optionally, in S2, a knitting sealing machine is adopted for sealing. Optionally, in S4, the sock is placed in a 3D silk melting machine for shaping.

For the sock obtained after S8 is completed (which means the shoe body of the sock-like shoe), the following steps are carried out after the removal of the membrane pressing sleeve (under such circumstance, the shoe body is nested with the shoe last):
Step 1: laying an elastic cushion on a sucking and shrinking tabletop;
Step 2: placing the shoe body nested with the shoe last on an upper part of the elastic cushion;
Step 3: covering the surface of the shoe body with a silicone membrane, and extending an edge of the silicone membrane to the upper part of the elastic cushion;
Step 4: pressing the pressing plate on the upper part of the elastic cushion, and fitting the edge of the silicone membrane completely between the elastic cushion and the pressing plate in a sealing way;
Step 5: sucking air at an upper part of a through-hole out using a vacuum pump for 10s, such that the silicone membrane fits the surface of the shoe body under vacuum;
Step 6: controlling a heating box to horizontally slide relative to the sucking and shrinking tabletop such that the sock enters the heating box and remains for 5 minutes and that the silicone membrane fits a thermoplastic membrane on the surface of the shoe body at 150°C; and,
Step 7: controlling the heating box to horizontally slide relative to the sucking and shrinking tabletop to move the sock out of the heating box after the silicone membrane fits the surface of the shoe body at a high temperature, cooling, and removing excessive silicone membrane to complete processing of a silicone shoe vamp.

The thermoplastic membrane is any one or a mixture of several ones of PE, PVC, PP, PS and TPU.

The first 3D vacuum sucking and shrinking of the sock, which means the hot pressing, sucking and shrinking under vacuum in step S8, and the second 3D vacuum sucking and shrinking of shoe body of the sock-like shoe formed after the first 3D vacuum sucking and shrinking can both be carried out using the 3D vacuum sucking and shrinking device. The use of the 3D vacuum sucking and shrinking device enhances production efficiency and improves quality of the sock-like shoes.

In conclusion, the 3D vacuum sucking and shrinking processing process, the 3D vacuum sucking and shrinking device and the method for processing a silicone shoe vamp provided by the present disclosure adopt the thermoplastic membrane; the thermoplastic membrane is quickly and tightly adhered to the surface of the sock in a way of hot pressing, sucking and shrinking under vacuum to further shape the sock and form a waterproof layer, so that the formed sock has a waterproof characteristic; besides, the thermoplastic membrane added to the sock makes the sock more wearable and durable. Compared with the prior art, the 3D sock, the present disclosure produces sock-like shoes through 3D socks, simplifying the production process, improving production efficiency and quality of the sock-like shoes, and realizing 3D production of sock-like shoes.

The foregoing are merely embodiments of the present disclosure, and shall not be construed limiting the patent protective scope of the present disclosure. All equivalent changes made on the basis of the description and accompanying drawings of the present disclosure or direct or indirect application thereof to other relevant technical fields shall fall within the protective scope of the present disclosure.

## Claims

1. A three-dimensional (3D) vacuum sucking and shrinking process, **characterized by** comprising the following steps:
S1: knitting: knitting a sock using a 3D knitting machine and making preparations for sealing;
S2: sealing: sealing the sock obtained in S1 on one side;
S3: placing a shoe last: placing the shoe last into the sock;
S4: hot-pressed shaping under vacuum: shaping the sock obtained in S3under heating and vacuum conditions;
S5: cooling: cooling the sock shaped in S4 in a cooling chamber at -10°C-5°C;
S6: fixing a shaping membrane: covering sock with a shaping membrane and fixing the shaping membrane;
S7: preparation before sucking and shrinking: covering the sock obtained in S6 with a membrane pressing sleeve;
S8: hot pressing, sucking and shrinking under vacuum: hot pressing, sucking and shrinking the sock covered with the membrane pressing sleeve in S7 under vacuum to fix the shaping membrane on the outer side of the sock to realize complete shaping; and,
S9: assembling: assembling a shoe sole to the sock obtained in S8 to obtain a complete shoe.

2. The 3D vacuum sucking and shrinking process according to claim 1, wherein the shaping membrane in S6 is a thermoplastic membrane.

3. The 3D vacuum sucking and shrinking process according to claim 2, wherein the thermoplastic membrane is any one of PE, PVC, PP, PS and TPU.

4. The 3D vacuum sucking and shrinking process according to claim 1, wherein the membrane pressing sleeve is high temperature resistant rubber.

5. The 3D vacuum sucking and shrinking process according to claim 1, wherein heating iron is adopted in S6 for melting and fixation.

6. The 3D vacuum sucking and shrinking process according to claim 1, wherein a knitting sealing machine is adopted in S2 for sealing.

7. The 3D vacuum sucking and shrinking process according to claim 1, wherein in S4, the sock is placed in a 3D silk melting machine for shaping.

8. The 3D vacuum sucking and shrinking process according to claim 1, wherein the sock is placed in a 3D vacuum plastic forming machine in S8 for hot pressing, sucking and shrinking under vacuum.

9. A three-dimensional vacuum sucking and shrinking device, **characterized by** comprising a sucking and shrinking assembly and a thermal fixing assembly;
the sucking and shrinking assembly comprises a base, a sucking and shrinking tabletop, an elastic cushion, a pressing plate and a vacuum pump, wherein the sucking and shrinking tabletop is positioned at an upper part of the base, the sucking and shrinking tabletop is provided with a vent hole, the vacuum pump is provided below the sucking and shrinking tabletop to downward suck air above the sucking and shrinking tabletop via a through-hole, the elastic cushion is positioned at an upper part of the sucking and shrinking tabletop, the pressing plate is movably clad on an upper part of the elastic cushion, the pressing plate is provided with a handle, a through-hole in the shape of a shoe sole is formed at the middle part of the pressing plate, a shoe body nested with a shoe last is placed at the through-hole, the surface of the shoe body is covered with a silicone sleeve, and an edge of the silicone sleeve is pressed fit between the pressing plate and the elastic cushion;
the thermal fixing assembly comprises a heating box, and the heating box is horizontally and slidably connected to the upper part of the sucking and shrinking tabletop, such that the shoe body enters or exits from the heating box.

10. The three-dimensional vacuum sucking and shrinking device according to claim 9, wherein one end of the pressing plate is rotationally connected to the sucking and shrinking tabletop, and the other end of the pressing plate is pressed against the upper part of the elastic cushion 3 via a movable lock catch.

11. The three-dimensional vacuum sucking and shrinking device according to claim 9, wherein a horizontal guide rail is provided on a lateral side of the sucking and shrinking tabletop, and a slider matched with the horizontal guide rail is provided at the lower part of the heating box.

12. The 3D vacuum sucking and shrinking process according to claim 9, wherein a cooling fan which faces the shoe body is fixed on the heating box.

13. A method for processing a silicone shoe vamp, using the 3D vacuum sinking and shrinking device according to any one of claims 9-12, comprising the following steps:
Step 1: placing a shoe last into a shoe body, and laying an elastic cushion on a sucking and shrinking tabletop;
Step 2: placing the shoe body nested with the shoe last on an upper part of the elastic cushion;
Step 3: covering the surface of the shoe body with a silicone membrane, and extending an edge of the silicone membrane to the upper part of the elastic cushion;
Step 4: pressing the pressing plate on the upper part of the elastic cushion, and fitting the edge of the silicone membrane completely between the elastic cushion and the pressing plate in a sealing way;
Step 5: pumping air at an upper part of a vent hole out using a vacuum pump such that the silicone membrane fits the surface of the shoe body under vacuum;
Step 6: controlling a heating box to horizontally slide relative to the sucking and shrinking tabletop such that the shoe body enters the heating box and that the silicone membrane fits a thermoplastic membrane of the shoe body at 150°C-250°C; and,
Step 7: controlling the heating box to horizontally slide relative to the sucking and shrinking tabletop to move the shoe body out of the heating box after the silicone membrane fits the surface of the shoe body at a high temperature, cooling, and removing excessive silicone membrane to complete processing of a silicone shoe vamp.

14. The method for processing a silicone shoe vamp according to claim 13, wherein in step 5, the pumping time of the vacuum pump is 10-35 seconds.

15. The method for processing a silicone shoe vamp according to claim 13, wherein in step 6, the shoe body remains in the heating box for 5-20 minutes.
